# EUROPEAN PATENT SPECIFICATION

(11) **EP 2 888 061 B1**
(45) Date of publication and mention of the grant of the patent: **03.08.2016**
(21) Application number: 13750935.2
(22) Date of filing: 19.08.2013
(51) Int. Cl.: B08B 9/027, B08B 9/049, B08B 9/08, E03F 5/04, C09K 5/18

(54) **METHOD FOR CLEANING A WASTE WATER VESSEL BEING USED IN THE WASTE WATER INDUSTRY**
VERFAHREN ZUR REINIGUNG EINES IN DER ABWASSERINDUSTRIE VERWENDETEN ABWASSERGEFÄSSES
PROCÉDÉ DE NETTOYAGE D'UN RÉCIPIENT D'EAU UTILISÉ DANS L''INDUSTRIE DES EAUX USÉES

(30) Priority: 24.08.2012 GB 201215154
(43) Date of publication of application: 01.07.2015
(73) Proprietor: Green Channel Limited, Rue Cohu, Castel GY5 7SY (GB)
(72) Inventor: PALMER, Cyril, Wareham Dorset BH20 4JB (GB); ROE, Ashley Edwin, Ashbourne Derbyshire DE6 2GL (GB)
(74) Representative: Script IP Limited
(86) International application number: PCT/GB2013/052187
(87) International publication number: WO 2014/029979

(56) References cited:
- GB-A- 2 276 218
- GB-A- 2 283 023
- US-A- 3 875 083
- US-A- 5 183 581

## Description

### FIELD OF THE INVENTION

The present invention relates to a method for cleaning a waste water vessel being used in the waste water industry.

### BACKGROUND OF THE INVENTION

In the waste water industry, it is common for waste water vessels to become clogged with deposits comprising waste fats, oils or grease. The term FOG is used herein and is recognised in the industry, as describing compositions including fat, oil, and/or grease.

Typically, these deposits are caused as a result of high temperature, liquid FOG being inappropriately disposed of After being disposed of, the FOG begins to cool down. Once the temperature of the FOG drops below the melting point, it solidifies and forms deposits within the waste water vessel. Over time, these deposits grow and impede the passage of waste water through the waste water vessel The effectiveness of the waste water vessel is thereby reduced.

Once the deposits have reached such an extent that the effectiveness of the waste water vessel has become unacceptable to its operators, it becomes necessary to clear the waste water vessel of the deposits. Typically, the process is done using manual labour. An operator enters the water vessel and "digs" the deposits out by use of a shovel. This process is expensive, time consuming, unpleasant and potentially dangerous due to the presence of sewer gases. These gases, which include hydrogen sulphide, sulphur dioxide and methane, may be toxic and may have the potential to cause explosions and/or fires. Since this cleaning procedure necessarily involves the disconnection of the waste water vessel from any sewerage system, the cleaning must be carried out during periods of low usage - often in the early morning. As a result, there is a limited window of opportunity in which cleaning can be carried out. It may be the case that this window is insufficient to fully clean out the waste water vessel, in which case the process must continue the following morning. During the intervening time, the deposits may have grown. This can result in a situation in which the waste water vessel takes many days to fully clear.

The cleaning process is currently performed using manual labour as a consequence of the way the waste water industry works. The waste water industry uses bacteria cultures in order to help to break down various kinds of organic matter. Consequently the industry has a strong prejudice against the use of chemicals, which may damage or kill the bacteria cultures. There is also the potential risk that potentially toxic chemicals, or dangerous products of chemicals reacting together, could inadvertently be distributed into the environment or back into the water supply. For example, it is not uncommon for waste water to be pumped back into the sea or other watercourse. For this reason not only is there a technical prejudice against the use of chemicals in the cleaning of waste water vessels, but there is also strict environmental rules governing what is and is not allowed to be used discharged in waste water.

Accordingly, it would be desirable to provide an improved process for cleaning a waste water vessel in the water industry, which allows the waste water vessel to be cleaned quickly and efficiently, without manual labour and without damaging the bacteria cultures.

US3875083 discloses the use of various compositions that comprise powdered aluminium and an alkali metal nitrate to clean drains, in particular U bends in drains. The chemicals used produce an exothermic reaction that is used to melt solidified grease. The idea is to use non-toxic chemicals, such that toxic chemicals do not need to be handled.

US5183581, GB2283023 and GB2276218 describe methods of dewaxing oil tanks and pipework using the exothermic reaction of chemicals added to the vessels being dewaxed.

### SUMMARY OF THE INTENTION

Viewed from a first aspect, the present invention provides a method of cleaning a waste water vessel used in the waste water industry, the method comprising: adding a first quantity of a first reagent that is a sodium salt to the waste water vessel; and adding a second quantity of a second reagent that is a chlorine salt to the waste water vessel, said first and second reagents being reagents that react together in an exothermic reaction the products of which comprise sodium chloride and nitrogen, the heat generated from the exothermic reaction being sufficient to cause solidified FOG deposits in the waste water vessel to melt.

The present invention recognises that much of the deposits to be cleared away in the waste water vessels are fairly volatile and the application of heat to these deposits could result in their melting thereby facilitating their removal. An exothermic chemical reaction could generate the required heat and provided that no or very limited toxic chemicals result from the reaction, the FOG deposits found in a waste water vessel could be removed by melting without the need for manual labour. In this regard chemicals that react exothermically and generate nitrogen and sodium chloride as products could be used, as both substances are common in nature and are non-toxic to the bacteria cultures used in the waste water industry. These products could also be safely released back into the sea or other watercourse with few, if any, adverse effects. Furthermore, the generation of nitrogen gas would cause effervescence and agitation which would help to mix the reagents and may help in the removal of deposits. Furthermore, since many water treatment stations are already equipped to deal with sodium chloride, the effect of any accidentally release of sodium chloride into the main water supply is not deemed to be a problem. It should also be noted that the melting of the FOG deposits enables them to be removed more quickly and easily, thereby reducing the time during which the waste water vessel needs to be isolated from the system. The FOG deposits may be of two types, the mainly organic type in which the FOG is formed from fats oils and greases, or calcified FOG known as FOGc where calcium has leached out from concrete containment vessels such as a concrete sewer and has been absorbed by the FOG. The present invention is applicable to both types of FOG and has been found to be effective in aiding and simplifying the removal process for both these types of deposits. For the sake of simplicity the two types of FOG deposits are simply referred to as FOG in the application.

It should be noted that in some embodiments there may be additional products generated from the reaction but any of these that are non-gaseous are non-toxic and not harmful to bacteria used in waste water treatment. Any gases released may be vented or collected as required.

Embodiments of the invention may further comprise the step of adding a third quantity of an activator to the waste water vessel, wherein the third quantity is selected in order to control a temperature the solidified FOG deposits are raised to by the exothermic reaction. An activator, or catalyst, may be supplied in order to speed up the reaction between the two reagents. An example of an activator or catalyst may be acetic acid, which again is not a toxic chemical and can therefore be used in the waste water industry. Increasing the speed of the reaction increases the rate at which heat is generated. As a result of increasing the rate at which heat is generated, the speed at which the FOG deposits melt is increased. A faster melting speed is advantageous, because it allows the waste water vessel to be cleared of FOG deposits more quickly. Consequently, the amount of time that the waste water vessel may be inoperative for is reduced.

The first reagent and second reagent may be mixed together prior to being added to the waste water vessel in embodiments of the invention. By carrying out the invention in this way, it is possible for an operator to help ensure that the majority of the reagents are mixed together before adding the reagents to the waste water vessel. This helps to prevent a situation in which a waste water vessel may form "pockets" of unreacted reagents, which may lead to insufficient heat being generated in order to melt FOG deposits in the waste water vessel and to these unreacted reagents being present in the waste water following the reaction. Furthermore, it may make the transport and addition of these reagents easier, and where an activator is used to control the speed of the reaction, any earlier mixing of just the reagents should not cause a problem of reactants reacting in any significant manner before they are in situ.

In other embodiments, different combinations of the first and second reagents and activator may be mixed together, prior to being added to the waste water vessel For example, in some embodiments, the first reagent and activator may be mixed together before being added to the waste water vessel. As another example, all of the first reagent, second reagent, and activator may be mixed together prior to being added to the waste water vessel.

The activator may be chosen such that when the activator, first reagent and second reagent are mixed together, the pH is between 1.5 and 2.5 More particularly, the desired pH may be between 1.9 and 2.1 or substantially 2.0. In some embodiments the amount of activator added to the waste water vessel is selected in order to raise the temperature of the FOG deposits to below 96°C and in some embodiments to between 50-75°C or between 40-50°C.

Depending on the nature of the deposits and on the waste water vessel itself the quantity of activator can be selected in order to produce a desired temperature It may be disadvantageous to raise the temperature in some more fragile vessels to too high a value, while in others a high temperature may be acceptable and this may be advantageous particularly where deposits with a higher melting point are found.

Embodiments of the invention may comprise the step of adding a quantity of a surfactant to the waste water vessel. The surfactant may comprise a soap, i.e. a salt of a fatty acid.

A surfactant may be added in order to help separate the melted FOG deposits from the waste water. In this regard the surfactant will act to reduce the surface tension and help the melted FOG deposits float on the waste water facilitating their separation.

The invention uses a sodium salt as the first reagent. One example of such a salt is sodium nitrite.

The invention uses a chlorine salt as the second reagent. One example of such a salt is ammonium chloride

Ammonium chloride and sodium nitrite are known from the chemical industry to react exothermically and generate nitrogen, sodium chloride and water all of which are acceptable inert chemicals that can be allowed to be disposed of via a waste water system.

The reaction may additionally generate nitrogen dioxide. Nitrogen dioxide is a gas and as such can be vented, however, it is desirable to keep the levels of nitrogen dioxide to a very low level. It has been found that changing the pH of the mixture changes the amount of nitrogen dioxide generated, and selecting a pH of between 2.0 and 2.5 produce a good trade-off between reducing the amount of nitrogen dioxide produced while increasing the temperature of the reaction.

Embodiments of the invention may select reagents such that the products of the exothermically reaction consist of sodium chloride, nitrogen and water. An advantage of the products of the exothermic reaction consisting of only these substances is that the environmental impact of carrying out the invention in the waste water industry is negligible and therefore should be allowed.

In embodiments of the invention, the reagents are pumped into the waste water vessel. By pumping the reagents into the vessel, perhaps at the top, part way down or at the bottom, it is possible for the operator to help add the reagents efficiently and help ensure that they are distributed throughout the waste water vessel.

In embodiments of the invention a layer of liquid FOG deposits is formed along with a layer of sodium chloride solution; and nitrogen gas, in the waste water vessel. The nitrogen gas and layer of sodium chloride solution (e.g. brine) are formed as a result of the reagents reacting together. The layer of liquid FOG deposits is produced as a result of the heat generated from the exothermic reaction causing the FOG deposits to melt. Since the FOG deposits will not combine with the water in the sodium chloride solution, this leads to the formation of at least two distinct layers. The layer of liquid FOG deposits may, for example, be the top layer as generally FOG deposits are less dense than water or brine. If this is the case, it is possible for the layer of liquid FOG deposits to be extracted or "drawn off" from the waste water vessel. An advantage of this is that the operator can refine or recycle these FOG deposits, or dispose of them at a place remote from the waste water system. The recycling of these FOG deposits not only limits the environmental impact that may be caused if these deposits were to be burnt or dumped, but also allows a scarce resource to be retrieved. If the FOG deposits are separated from the waste water with the aid of a surfactant then their extraction and subsequent handling may be facilitated as they will form a separate layer on top of the waste water.

Embodiments may involve carrying out the method on a waste water vessel that forms part of a waste water system. Such a method comprises the further steps of isolating said vessel from the waste water system prior to adding said first and second reagents and connecting said vessel to said waste water system following said exothermic reaction. Where the embodiment also comprises the step of drawing off a layer of liquid FOG deposits, the reconnection of the waste water vessel to the waste water supply occurs after the step of drawing off the layer of liquid FOG deposits.

Embodiments may comprise carrying out the method periodically such that the temperature of the waste water vessel remains sufficient to cause solidified FOG deposits in the waste water vessel to melt. For example, quantities of reagents may be added continually. This may occur through a "drip feeding" system or equivalent. As another example, the method may be carried out over a period of time. As yet another example, the method may be carried out in response to some condition such as the temperature of the waste water vessel dropping below a predetermined value. Such an embodiment would serve to prevent or at least impede any build-up of FOG deposits in the waste water vessel over time.

Embodiments of the invention may comprise adding an inhibitor to the waste water vessel. The inhibitor may be used in order to keep the temperature of the solidified FOG deposits in the waste water vessel below a predetermined value. This can be important for safety reasons. For example, excess heat and pressures can lead to explosions and rupturing of the vessels. Thus, an inhibitor may be provided in order to keep the temperature of the solidified FOG deposits in the waste water vessel below 96°C for example. In some embodiments, the inhibitor is added after the steps of adding the reagents and in response to detecting a temperature of said water vessel rising above a predetermined temperature. For example, the inhibitor may be added to the waste water vessel after the reagents have been added and in response to the waste water vessel reaching a temperature of 75°C.

The step of adding an inhibitor to the waste water vessel may cause the pH of a mixture comprising the first reagent and second reagent to increase, i.e, for the acidity to lessen, or for the acidity to approach 7.0. That is, when the inhibitor is added to the waste water vessel, the pH of the mixture comprising the inhibitor, the reagents, and the activator (if present) will have a less acidic pH than the mixture before the inhibitor is added. It has been found that in some embodiments the speed of the reaction can be controlled by changing the PH and in particular by decreasing the acidity of the mixture, the reaction can be slowed down, causing heat to be generated more slowly.

In some embodiments, a mixture comprising the first reagent and activator is sprayed onto a wall of the waste water vessel. After having sprayed such a mixture onto walls of the waste water vessel (including on the FOG deposits of the waste water vessel), the reaction can be initiated by subsequently spraying the second reagent onto the walls of the waste water vessel (including the FOG deposits). The exothermic reaction can therefore be targeted to occur in specific locations within the waste water vessel and thereby directly apply heat to the FOG deposits themselves. Accordingly, it may be possible to reduce the amount of the reagents and activator necessary to melt the FOG deposits in the waste water vessel. A similar effect may be achieved by firstly spraying a mixture of the first and second reagents on the walls and FOG deposits of the waste water vessel and by secondly spraying the reagent onto the walls and FOG deposits.

The first reagent and second reagent may each have a 3-6 Molar concentration. In particular, the first reagent and second reagent may each have a 4.9-5.1 Molar concentration or a substantially 5.0 Molar concentration. Such concentrations have been found to produce a good trade-off between lowering the generation nitrogen dioxide and producing a high temperature sufficient to melt the FOG deposits.

In embodiments, the waste water vessel comprises a settling tank in a waste water treatment plant. Alternatively, in embodiments the waste water vessel comprises a section of waste water pipes within a sewerage system.

### BRIEF DESCRIPTION OF THE DRAWINGS

The present invention will be described further, by way of example only, with reference to embodiments thereof as illustrated in the accompanying drawings, in which:
Figure 1 is a diagram schematically illustrating a cross section of a waste water vessel to be cleaned in accordance with one embodiment;
Figure 2 is a diagram schematically illustrating a cross section of waste water chamber and pipe that are to be cleaned in accordance with an embodiment,
Figure 3 is a flow diagram illustrating the basic steps involved in cleaning a waste water vessel according to one embodiment of the invention;
Figure 4 is a diagram schematically illustrating a cross section of a waste water vessel after it has been cleaned according to an embodiment of the invention;
Figure 5 is a flow diagram illustrating a method of cleaning a waste water vessel used in a sewage system in accordance with one embodiment;
Figure 6 is a flow diagram illustrating a method of cleaning a waste water vessel used in the waste water industry in accordance with one embodiment;
Figure 7 is a diagram schematically illustrating a cross section of a waste water pipe used in the waste water industry;
Figure 8 is a diagram schematically illustrating the cleaning of a waste water pipe used in the waste water industry according to one embodiment;
Figure 9 is a diagram schematically illustrating a wet well in a waste water treatment plant;
Figures 10A, 10B, and 10C show an example application system for cleaning a waste water vessel;
Figure 11 shows how the temperature of the reactions varies over time for different concentrations of the reagents at a pH of 2.5;
Figure 12 shows how the temperature of the reactions varies over time for different concentrations of the reagents at a pH of 2.0;
Figure 13 shows how the temperature of the reactions varies over time for different pHs of the reagents at a concentration of 3M;
Figure 14 shows how the temperature of the reactions varies over time for different pHs of the reagents at a concentration of 5M; and
Figure 15 shows how the temperature of the reactions varies over time for different pHs of the reagents at a concentration of 6M.

### DESCRIPTION OF EMBODIMENTS

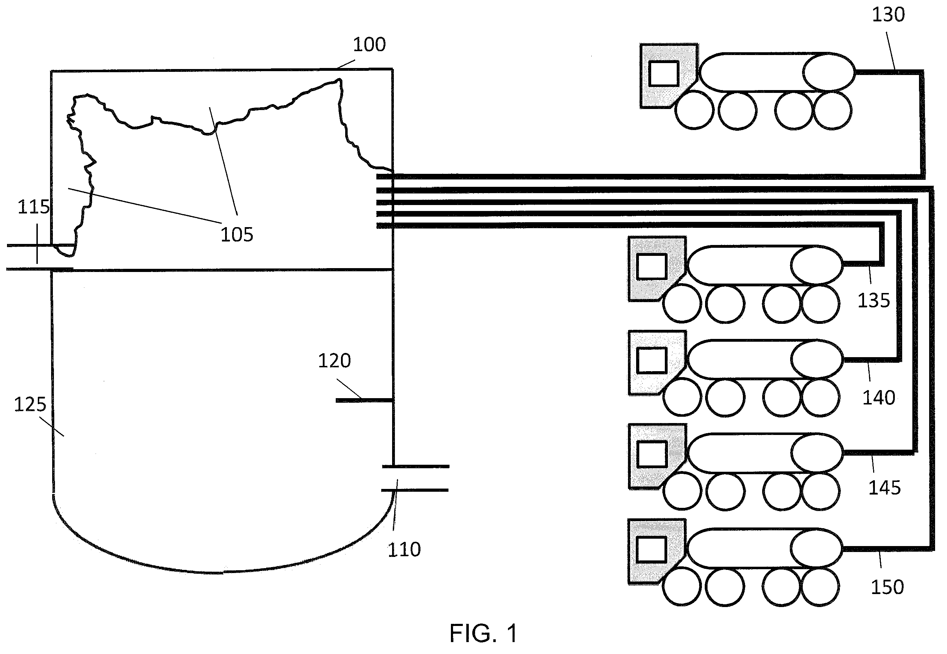

Figure 1 is a diagram schematically illustrating a cross section of a waste water vessel to be cleaned in accordance with one embodiment In this embodiment the waste water vessel 100 is a settling tank in a waste water treatment plant As shown in Figure 1, the waste water vessel 100 contains an inlet pipe 110, from which waste water 125 enters the vessel and an outlet pipe 115 located at the top of the waste water vessel 100. Waste water 125 enters the vessel via pipe 110 and is allowed to settle, causing particles and other detritus (not shown) to sink to the bottom of the tank. As waste water 125 enters the tank, the level of the waste water 125 rises, until it reaches the level of the outlet pipe 115 at which point, the top layer of waste water 125 exits via outlet pipe 115. The waste water 125 may comprise fats, oils and grease which have been inappropriately disposed of. These substances may initially enter the waste water vessel 100 in a liquid state. However, as they cool, the fats, oils and grease will solidify, Being lighter than water, these substances form a top layer on the waste water 125. As the fats, oils, and grease solidify, they may form FOG deposits 105 on the sides and ceiling of the waste water tank 100. Depending on their location, these deposits 105 may affect the capacity of the waste water vessel 100, and may block waste water 125 from entering via the inlet pipe 110 or exiting via the outlet pipe 115.

It will be appreciated that the inlet pipe 110 and outlet pipe 115 may be provided in a variety of configurations, depending on the operation and function of the waste water vessel 100. For example, the inlet pipe 110 may be located at the top or the bottom of the waste water vessel. Furthermore, the outlet pipe 115 may be located at the top or the bottom of the waste water vessel 110. In some embodiments, the outlet pipe 115 is installed as part of a gantry system. This allows the outlet pipe 115 to be moved up and down the waste water vessel 100, thereby allowing an operator to control the level of waste water 125 in the waste water vessel 100. In some embodiments, the outlet pipe 115 may be coupled to a pump, in order to pump waste water 125 out of the waste water vessel 100. The inlet pipe and outlet pipe may also be equipped with isolation valves (not shown). These valves can be used to halt the flow of water at the inlet pipe and outlet pipe. Used in combination, these valves can be used to isolate the waste water vessel 100 by preventing the movement of waste water 125 into or out of the waste water vessel 100.

The waste water vessel 100 also comprises a temperature sensor 120, such as a digital thermometer, which allows the operator to determine the temperature of the contents of the waste water vessel. The temperature sensor 120 may be placed in such a position that it will be submerged by the waste water 125. In other embodiments, a pressure sensor may be used instead or in addition to the temperature sensor 120.

According to an embodiment of the present invention, the waste water vessel 100 may be cleaned by the addition of a first reagent, provided via a first pipe 130, a second reagent, provided via a second pipe 135, an activator, provided by third pipe 140, a surfactant provided by a fourth pipe 145 and an inhibitor, provided by fifth pipe 150. Although Figure 1 shows the addition of the first reagent, second reagent, activator, inhibitor and surfactant via separate pipes from separate sources, it will be appreciated that it is possible to add them using the same pipe, either separately over time, or together in a mixture. Furthermore, it will be appreciated that where they are provided separately over time the first reagent, second reagent, activator, inhibitor and surfactant may be provided in any order. Furthermore, the first reagent, second reagent, activator, inhibitor and surfactant may be provided mixed together in any combination.

In Figure 1, pipes 130, 135, 140, 145 and 150 are connected to tankers, However, it will be appreciated that pipes 130, 135, 140, 145 and 150 may instead be connected to other sources, such as local storage facilities.

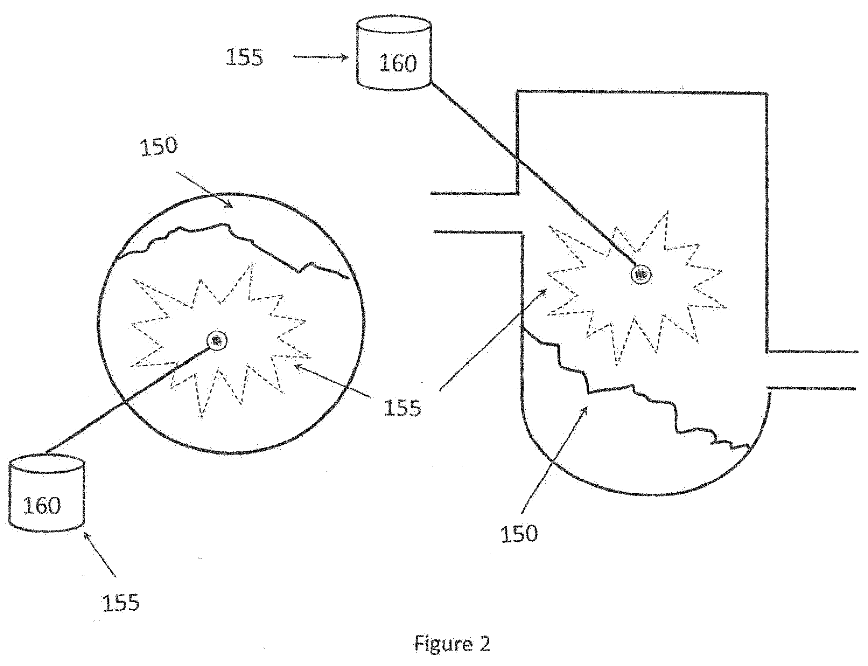

Figure 2 shows an embodiment in which a mixture that comprises two or more of the first reagent, second reagent, and activator are pre-mixed to form a first composition 155 before being sprayed via spray 160 into the waste water vessel. Any remaining chemicals can then also be delivered via spray 160 or by an additional spray, as required.

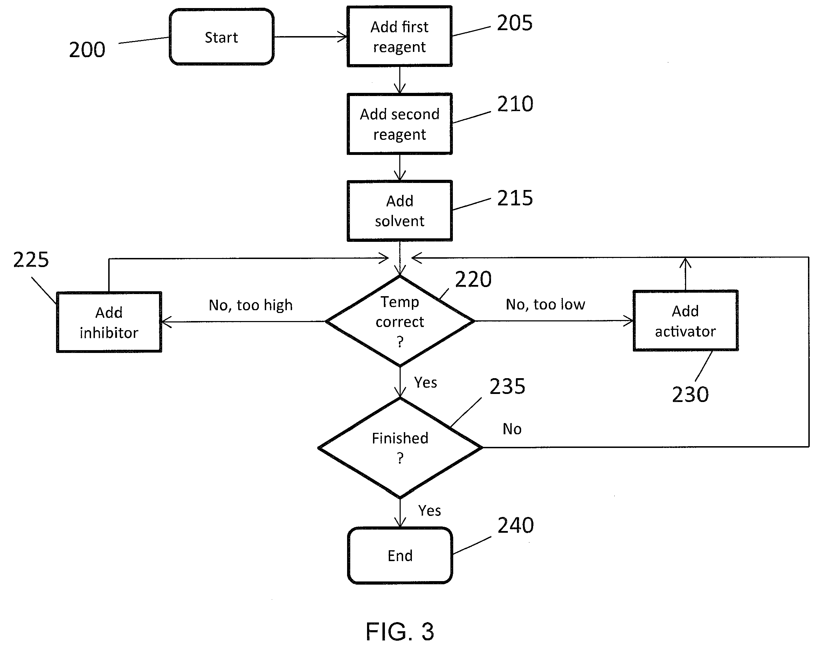

Figure 3 is a flow diagram illustrating the basic steps involved in cleaning a waste water vessel according to one embodiment of the invention. The process starts at step 200.

At step 205, the first reagent is added to the waste water vessel. The addition of the first reagent may occur from a tanker or from a local storage facility. The first reagent may be added to the top of the waste water vessel or further down the waste water vessel.

At step 210, the second reagent is added to the waste water vessel. It will be appreciated that although steps 205 and 210 are shown as separate steps, the first and second reagents may be added simultaneously in a single step, and may be mixed together prior to being added to the waste water vessel.

At step 215, a surfactant may be added to the waste water vessel. A surfactant can be used to aid the separation of the liquid FOG deposits from the waste water.

At step 220, the temperature of the FOG deposits may be checked. This step may be repeated throughout the procedure and can be used to control the temperature of the reaction where an activator and/or inhibitor are used. Checking the temperature of the FOG deposits may be carried out by the use of a temperature sensor, such as a digital thermometer, and may be checked either by checking the temperature of the waste water vessel itself or by checking the temperature of the waste water.

If the temperature is too low and it is desirable to raise it, then an activator is added to the waste water vessel in step 230. The activator or catalyst is used to increase the speed at which the first and second reagents react, thereby increasing the energy produced by the reaction and so increasing the temperature in the waste water vessel

If the temperature is too high and should be lowered, then in this embodiment an inhibitor is added to the waste water vessel in step 225. The inhibitor is used to slow down the reaction between the first reagent and second reagent, and thereby reduce the energy being produced by the reaction Consequently the temperature of the FOG deposits reduces. The inhibitor may be added if the temperature or pressure caused by the reaction is reaching a dangerous level. An inhibitor may also be supplied in order to increase the time of the reaction. This may prevent the FOG deposits being raised to a temperature far in excess of the melting temperature, for only a short period of time, which may result in few FOG deposits melting.

The checking of the temperature, the addition of any inhibitor and the addition of any activator may be carried out by an operator of the equipment or may be carried out as part of an automated system.

If an activator or inhibitor is added to the waste water vessel, the temperature may be checked again at step 220.

At step 235, the reaction is checked to see if it is "compete". The reaction may be deemed to be complete when a predetermined percentage of the reagents have been consumed. The reaction may also be deemed to be complete when the temperature of measured in the waste water vessel falls below some predetermined value. The reaction may also be considered to be complete when the FOG deposits have dropped below a certain quantity, such as either an absolute volume or mass or a percentage of the original volume or mass. The reaction may also be considered to be complete after a certain period of time has elapsed. The products of the reaction may also be monitored to determine when the reaction is deemed to have completed. Monitoring may be carried out by inspection, e.g. a visual inspection, or may be carried out in an automated manner. In this embodiment, if the reaction has not completed, step 220 is performed again. This may occur immediately or may occur after a period of time has elapsed. Alternatively, if the reaction has completed, then the process terminates at step 240.

The process shown in Figure 3 may be carried out periodically, such as once per month or once per year. The process may also be carried out continually. For example, small quantities of reagents may be continually or substantially continually added to the waste water vessel. By adding small quantities of reagents over a long period of time, rather than all at once, it may be possible to increase the temperature of the waste water to such an extent that FOG deposits are prevented from forming deposits. The process shown in Figure 3 may also be carried out in response to some condition being met. For example, the process may be carried out when it is detected that the flow of waste water through the waste water vessel has dropped to a certain rate, or has dropped to a certain percentage of its initial quantity. Alternatively, the process may be carried out in response to a visual inspection of the waste water vessel and determining that the quantity of FOG deposits in the waste water vessel means that the cleaning process should be carried out. In another embodiment, the cleaning process is carried out as a result of a predetermined volume or mass of FOG deposits being detected.

It will be appreciated that although this embodiment describes the steps as occurring in a particular order, the order of the steps may be freely rearranged. Steps that have been described as "may be carried out" are optional and may not be necessary in order for the invention to work.

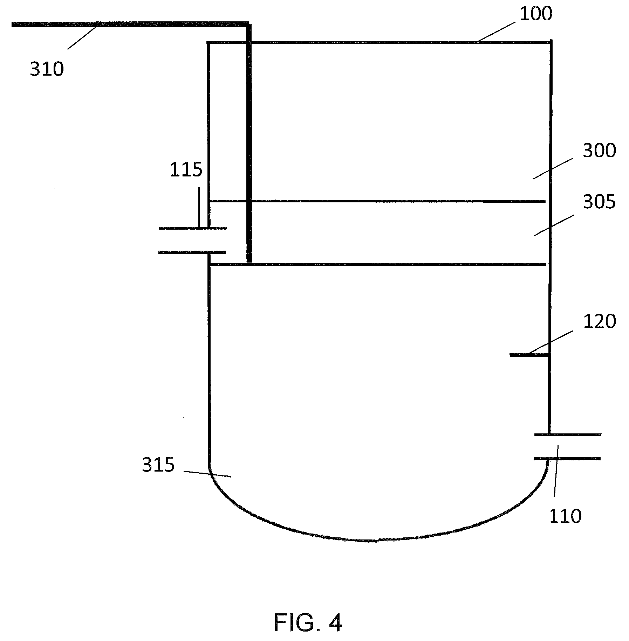

Figure 4 is a diagram schematically illustrating a cross section of a waste water vessel after it has been cleaned according to an embodiment of the invention. For conciseness, elements that have already been described are not described again in detail in this embodiment. The same reference numerals have been used to describe identical features, where appropriate.

The result of carrying out the invention on a waste water vessel is the formation of nitrogen gas 300, a layer of liquid FOG deposits 305 and sodium chloride, which may form a solution 315 with the waste water. The reaction may also produce a layer of detritus (not shown), which may be caused by impurities in the reagents, the fats, oils and grease or by impurities that were already present within the waste water vessel 100.

Typically, since FOG deposits are lighter than water, the layer of liquid FOG deposits 305 will be the top layer Optionally, the layer of liquid FOG deposits may be drawn off, extracted or removed from the waste water vessel 110. For example, the layer of liquid FOG deposits may be extracted via an extraction hose 310. The FOG deposits may also be extracted by the use of the outlet pipe 115. In some embodiments, a coloured dye (not shown) that combines with the liquid FOG deposits is added to the waste water vessel 100. This allows the layer of liquid FOG deposits to be more readily identified, which makes it easier to draw off the layer of liquid FOG deposits.

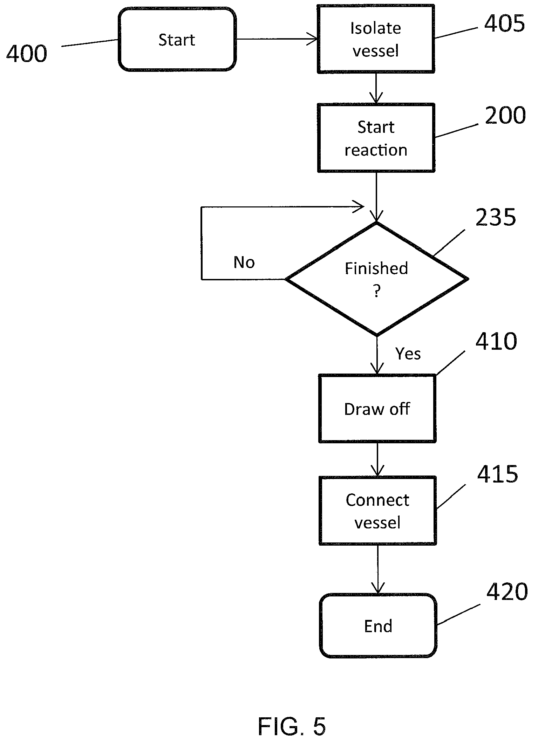

Figure 5 is a flow diagram illustrating a method of cleaning a waste water vessel used in a sewage system in accordance with one embodiment. For conciseness, elements that have already been described are not described again in detail in this embodiment. The same reference numerals have been used to describe identical features, where appropriate.

The process starts at step 400. At step 405, the waste water vessel is disconnected from the sewage system. This may occur by the use of isolation valves on the inlet and outlet pipes The disconnection may also be caused by diverting the flow of waste water away from the waste water vessel to be cleaned.

At step 200, the reaction begins with the addition of reagents and in some embodiments an activator and/or inhibitor, as already discussed. The completion of the reaction may be determined by any means already discussed, including by waiting a certain period of time, monitoring the volume or mass of the reagents, products or FOG deposits or by monitoring the temperature or pressure. Once the reaction is deemed to be "complete" at step 235, the layer of liquid FOG deposits, which may typically be the top layer of the products of the reaction, are drawn off at step 410.

Drawing off the top layer of liquid FOG deposits may be carried out by allowing the layer to drain off via the outlet pipe. This could be achieved by temporarily redirecting the flow from the outlet valve to a collection tank. The drawing off of the layer of FOG deposits may also be achieved by the use of an extraction hose, or other means of pumping out the layer of liquid FOG deposits from the waste water vessel.

Once the layer of liquid FOG deposits has been removed from the waste water vessel, the waste water vessel is reconnected to the sewage system at step 415 Reconnection may be achieved by reversing the process used to disconnect the waste water vessel from the sewage system initially. For example, reconnection may occur by redirecting the flow of waste water back to its original course. In another embodiment, the isolation valves in the outlet and inlet pipes are opened. The process ends at step 420.

The process described in Figure 5 may be carried out periodically, continually, or in response to a particular condition being met, as previously discussed.

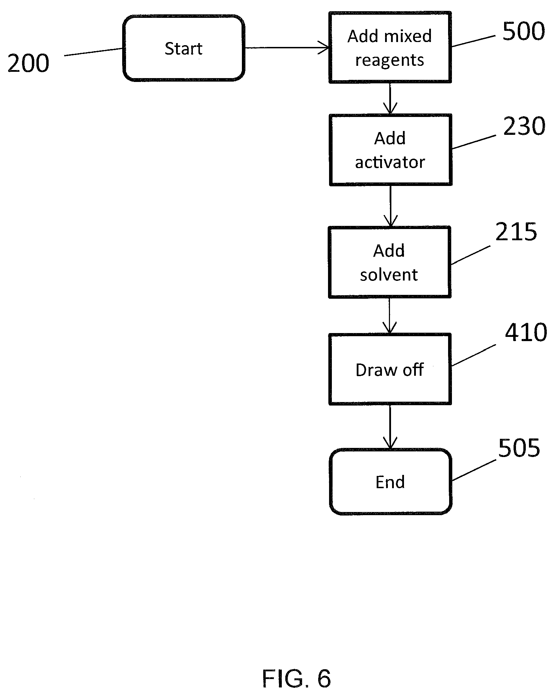

Figure 6 is a flow diagram illustrating a method of cleaning a waste water vessel used in the waste water industry in accordance with another embodiment. For conciseness, elements that have already been described are not described again in detail in this embodiment The same reference numerals have been used to describe identical features, where appropriate.

The process starts at step 200. At step 500, the reagents are added to the waste water vessel. In this embodiment, the first and second reagents have been mixed together prior to adding them to the waste water vessel.

At step 230, an activator is added to the waste water vessel. In this embodiment, the temperature or speed of the reaction may not be checked prior to adding the activator. Instead, the quantity of the activator used for the reaction may be based on factors such as the quantity of reagents used, the speed of reaction required, the volume of the waste water vessel, the desired temperature to which the FOG deposits are to be raised and the desired speed of the reaction.

At step 215, a surfactant is added to the waste water vessel. This surfactant aids the separation of the melted FOG deposits from the waste water.

At step 410, the layer of liquid FOG deposits is extracted. The process ends at step 505.

The process described in Figure 6 may be carried out periodically, continually, or in response to a particular condition being met, as previously discussed.

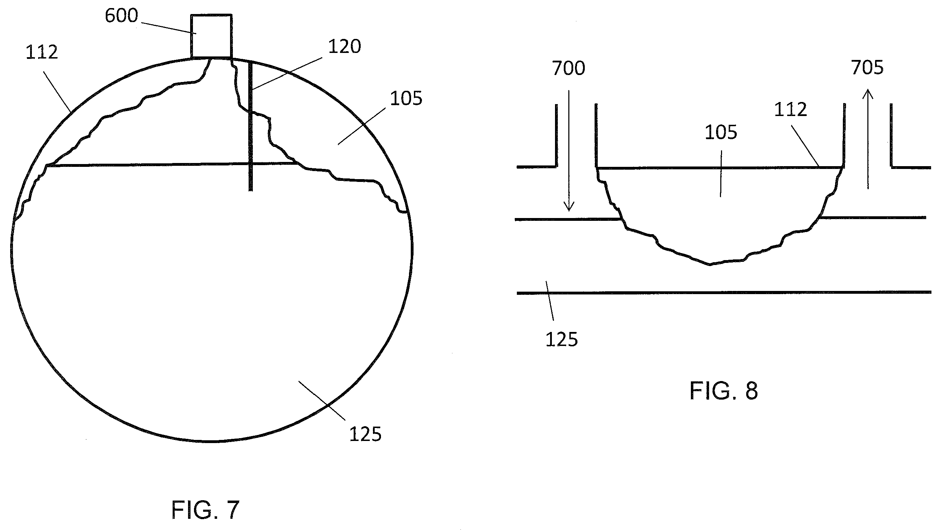

Figure 7 is a diagram schematically illustrating a cross section of a waste water pipe used in the waste water industry. For conciseness, elements that have already been described are not described again in detail in this embodiment. The same reference numerals have been used to describe identical features, where appropriate.

In this embodiment, the waste water vessel is a pipe 112, which may be a pipe used as part of a sewage system. The pipe 112 includes an inspection hatch 600 which is used to access the pipe and can be used to vent the nitrogen gas produced as part of the reaction. The release of gas can be used to lower the pressure in the pipes, which may be necessary for safety reasons.

Figure 8 is a diagram showing a side view of a waste water pipe 112 that is cleaned according to an embodiment. In this embodiment, there are further access points 700 and 705 that provide access to the pipe. These may be inspection hatches such as that shown in Figure 7 or they may be other access points. The reagents are provided via an access point 700. Liquid flows through the pipe from left to right and thus, FOG deposits that have solidified downstream of access inlet 700 are melted by the exothermic reaction. A downstream access point 705 can be used to draw off the layer of liquid FOG deposits. This process can be performed periodically. Alternatively, it can be performed continually or continuously, such that reagents are added to the pipe and FOG deposits removed from it continually and build-up of FOG deposits is avoided or at least impeded.

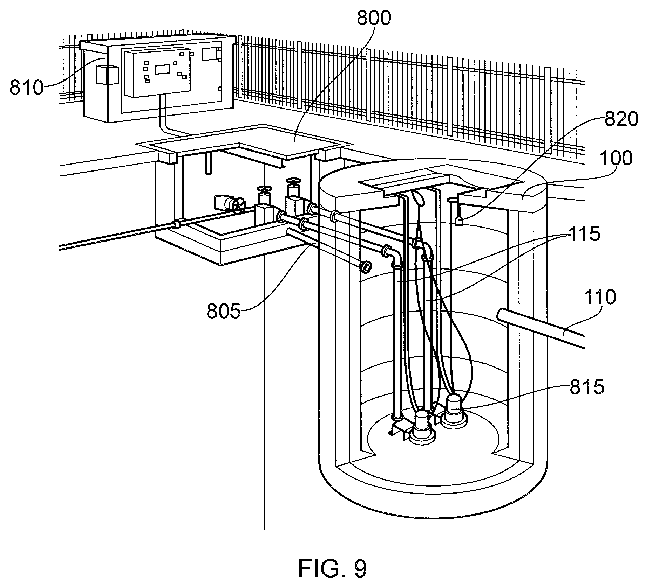

Figure 9 is a diagram schematically illustrating a wet well in a waste water treatment plant. Such a wet well is one to which the present invention may be directed. Figure 9 shows the wet well 100, into which a main inlet flow pipe 110 from a sewage pumping station leads.

Two pumps 815 draw water into the outlet pipes 115. In normal operation, only one of the two pumps 815 is in operation at any time. The pump that is currently active is frequently changed so that neither of the pumps 815 wears out too fast. For example, the pump that is active may be rotated every 24 hours. In the event that the active pump is non-responsive, or if one pump is not sufficient to draw the waste water out quickly enough, the second pump may be employed. This decision may be made manually, by an operator, or automatically, by a control system.

There is a drain pipe 805 from the valve chamber that feeds rainwater into the wet well. In this embodiment, the rainwater pipe has been fitted with an optional non-return flap, which helps to prevent waste water from flowing in an undesired direction.

Kiosk 810 houses a control panel, which can be used to adjust the level of the pumps 815 in the wet well 100. The pumps 815 can be moved up and down locating rails. This allows the level of waste water in the wet well 100 to be controlled, since the pump will only draw out waste water that lies above the level of the pump.

Additionally, pumps 815 may be stopped and started by a level controller. For example, a sensor 820 may be mounted in the wall of the wet well 100 and used to detect the level of the waste water in the wet well 100. The sensor 820 may be, for example, an ultrasonic sensor. The sensor 820 can be configured to move and start a pump 815 if the waste water reaches a predetermined level. A valve chamber 800 allows access to valves on pipes 805, 115.

The wet well of Figure 9 is a waste water vessel that may be cleaned by a method according to an embodiment of the present invention. These vessels typically suffer from the accumulation of FOG deposits and are traditionally cleaned manually during the small hours of the night when waste water flow in such systems is low and they can therefore be isolated from the sewage system without causing undue disruption

Embodiments of the present invention can be used to clean these vessels instead. In such a case valves (not shown) on the inlet and outlet pipes 110, 115 are closed and the wet well is isolated from the sewage system Reagents in the form of a mixture of ammonium chloride and sodium nitride are then added followed by an activator of acetic acid. These substances are pumped into the wet well via a pipe inserted into an inspection hatch (not shown) in the roof The reagents react exothermically raising the temperature in the wet well and causing any solidified FOG deposits to melt and generating sodium chloride, water and nitrogen. The nitrogen is generated in the form of a gas and agitates the liquids in the vessel helping in the removal of the deposits and mixing the reactants. A surfactant is then added via a pipe through the inspection hatch to help separate the melted FOG deposits from the waste water, the FOG deposits arethen drawn off via an extraction hose inserted through the inspection hatch. These FOG deposits can then be recycled.

The wet well is then reconnected to the system by opening the valves on the inlet and outlet pipes and the cleaning is complete This cleaning can typically be performed in under an hour.

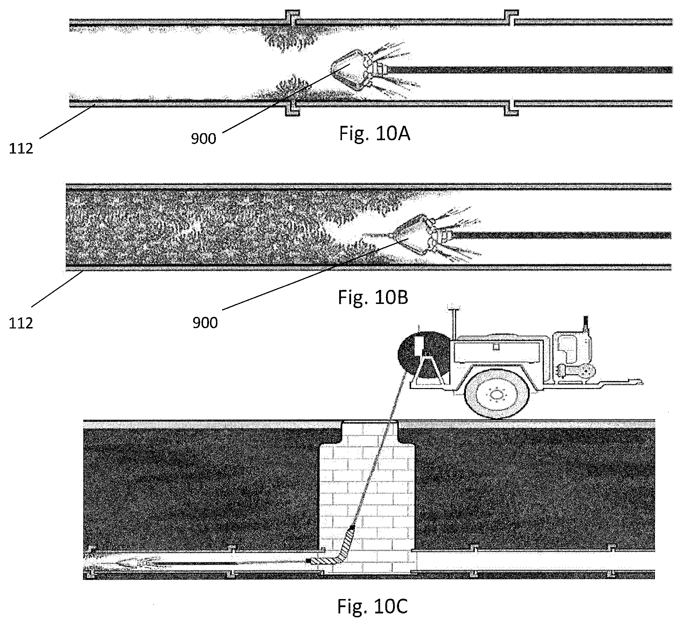

Figure 10 shows an example of delivering the reagents to a waste water vessel such as a pipe 112. The mechanism is shown generally in Figure 10C in which a Jetting system applies the reagents to the FOG. It will be appreciated that other jetting units can also be adapted for use with an appropriate jet nozzle fitted.

Figure 10A shows an example of delivering the reagents to a waste water vessel such as a pipe 112 in order to perform preventative maintenance. A nozzle 900 with jets at the rear is used for cleaning pipes that are not already clogged. A good level of thrust for the nozzle 900 is achieved by directing power from jets of the nozzle towards walls of the pipe 112. Figure 10B shows an example of delivering the reagents in which the pipe 112 is substantially blocked. Prior to using the nozzle 900, it may be necessary to open a pilot hole in the FOG using mechanical means In this example, the nozzle 900 is equipped with a forward firing jet to help remove blockages in front of the nozzle 900. Jets at the rear of the nozzle 900 are used to provide an effective pipe cleaning finish. If the level of FOG is particularly high, then the nozzle 900 may be moved backwards and forwards along the pipe 112 in order to improve the level of cleaning.

In either of these cases, by varying the jet pressure and movement speed of the nozzle, the amount of time required to clean the pipe 112 can be controlled. Typically, pipe cleaning would be performed by removing any initial blockage as shown in Figure 10B and then by performing periodic preventative cleaning as shown in Figure 10A.

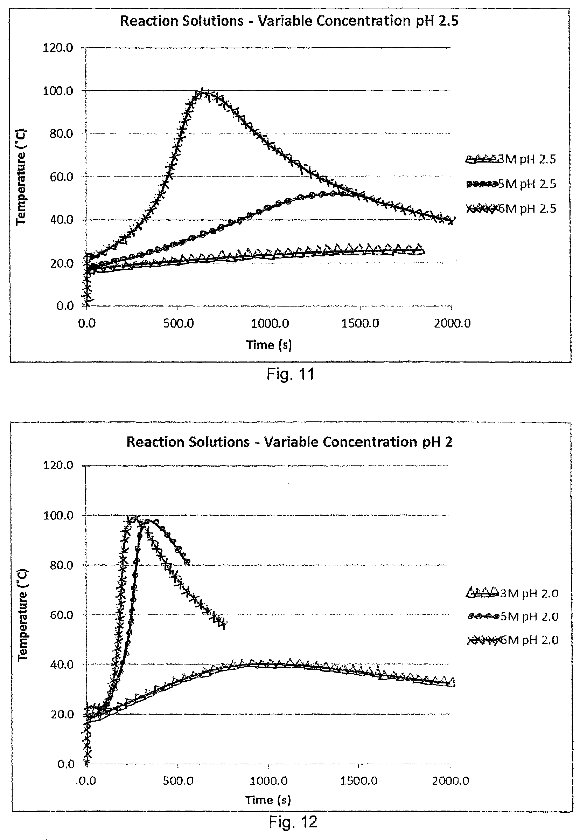

Figure 11 shows how the temperature of the reaction varies with time when the reagents namely sodium nitrite and ammonium chloride are part of a reaction solution having a pH of 2.5 and the concentration of the reagents is varied. With a 3M solution, the temperature increases slowly and reaches approximately 25°C after around 1800 seconds. With a 5M solution, the temperature increases less slowly to approximately 52°C after about 1300 seconds. With a 6M solution, the temperature is shown to increase significantly more quickly and to a higher level reaching approximately 100°C after about 675 seconds, before slowly reducing down to approximately 40°C after 2000 seconds.

Figure 12 shows how the temperature of the reaction varies with time when the reagents have a pH of 2.0 and the concentration of the reagents is varied. With a 3M solution, the temperature increases to 40°C at about 850 seconds before slowly tailing off and reducing. With a 5M solution however, the temperature rapidly increases to just under 100°C after about 300 seconds, again before quickly dropping. With a 6M solution, the temperature rapidly increases to about 100°C after around 250 seconds, before quickly dropping.

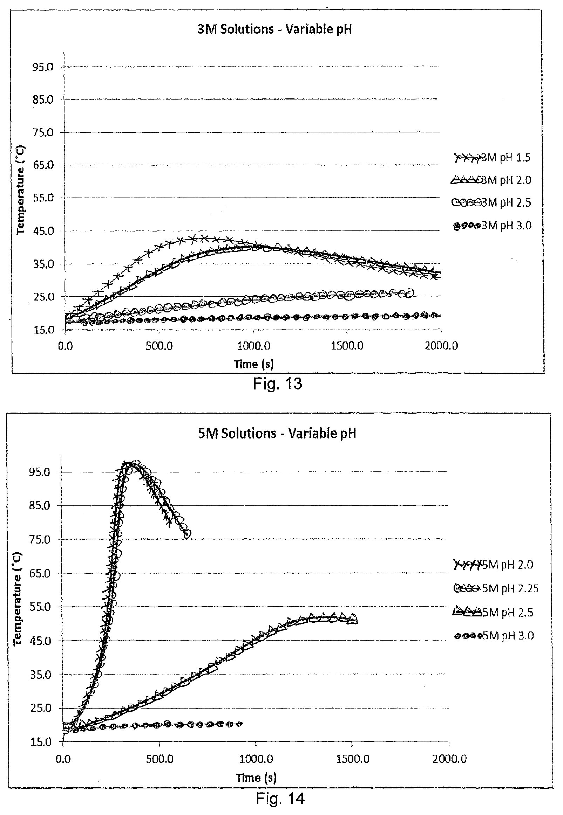

Figure 13 shows how the temperature of the reaction varies with time when a reaction solution comprising the reagents having a concentration of 3M are used and the pH of the solution is changed. For a solution having a pH of 1.5, the temperature increases to just under 45°C after around 600 seconds, before slowly tailing off. For a solution having a pH of 2.0, the temperature rises more slowly to reach a temperature of around 40°C after about 850 seconds, again before slowly tailing off. A solution having a pH of 2.5 slowly increases its temperature to just over 25°C at about 1800 seconds, while a solution having a pH of 3.0 slowly increases its temperature to 20°C after about 2000 seconds.

Figure 14 shows how the temperature of the reaction varies with time when reagents having a concentration of 5M are used and the pH of the reagents is changed. As can be seen, the temperature versus time profiles where the pH of 2.0 or 2.25 are very similar, with the reaction of a 2.25M solution being very slightly slower than for the 2.5M solution. Both solutions produce a temperature of just under 100°C after around 350 and 400 seconds respectively With a solution having a pH of 2.5, the temperature slowly increases to about 52°C after around 1300 seconds. Finally, for a solution having a pH of 3.0M, the temperature barely increases.

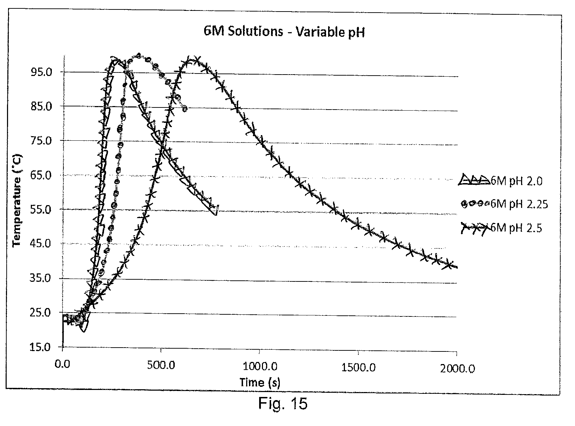

Figure 15 shows how the temperature of the reaction varies with time when reagents having a concentration of 6M are used and the pH of the reaction solution is changed. In each case, the reaction solution reached a temperature of about 100°C. The solution with a pH of 2.0 reached this temperature after about 250 seconds after which the temperature quickly decreased. The solution with a pH of 2.25 reached this temperature after about 400 seconds, after which the temperature decreased more slowly. Finally, the solution with a pH of 2.5 reached this temperature at about 675 seconds, after which the temperature decreased more slowly still to about 40°C at around 2000 seconds.

From these graphs, it will be appreciated that an appropriate temperature rise that is sufficient to raise the temperature of the FOG to above its melting point within a relatively small time can be achieved and a particular advantage therebygained by using reagent solutions with a concentration of 5M-6M and having a pH of about 2.0-2.5. In particular, a concentration of 5M and pH of 2.0-2.25 or a concentration of 6M and a pH of 2.0-2.25 is particularly advantageous.

It has also been found that the quantity of nitrogen dioxide that is generated varies with the pH of the reaction solution. It is important to limit the amount of nitrogen dioxide generated to no or very small amounts and as it has been found that the amount generated varies significantly with the pH of the reaction solution, thus the amount of nitrogen dioxide generated can be controlled by varying the pH. A pH level of between 2.0 and 2.5 for example has been found to generate particularly low levels of nitrogen dioxide while providing significant heat in a relatively short time.

Although particular embodiments have been described herein, it will be appreciated that the invention is not limited thereto and that many modifications and additions thereto may be made within the scope of the claims

## Claims

1. A method of cleaning a waste water vessel (100, 112) being used in the waste water industry, the method comprising:
adding a first quantity of a first reagent that is a sodium salt to the waste water vessel; and
adding a second quantity of a second reagent that is a chlorine salt to the waste water vessel,
said first and second reagents being reagents that react together in an exothermic reaction the products of which comprise sodium chloride and nitrogen, the heat generated from the exothermic reaction being sufficient to cause solidified fats oils and/or grease deposits (105) in the waste water vessel (100, 112) to melt.

2. The method of claim 1, wherein said method further comprises the step of adding a third quantity of an activator to the waste water vessel (100, 112), wherein the third quantity is selected in order to control a temperature the solidified fats oils and/or grease deposits (105) are raised to by the exothermic reaction.

3. The method of claim 2, wherein a mixture comprising said activator, said first reagent, and said second reagent has a pH between 1.5 and 2.5.

4. The method of any one of claims 2-3, wherein the third quantity is selected such that the exothermic reaction raises the temperature of the solidified fats oils and/or grease deposits (105) to below 96°C, preferably between 50-75°C.

5. The method of any preceding claim, said method comprising the further step of adding a quantity of a surfactant to the waste water vessel.

6. The method of any preceding claim, wherein the first reagent is sodium nitrite.

7. The method of any preceding claim, wherein the second reagent is ammonium chloride.

8. The method of any preceding claim, wherein the products of the reaction of the first and second reagents consist of sodium chloride, nitrogen and water.

9. The method of any preceding claim, wherein the step of adding the reagents to the waste water vessel comprises spraying them onto a wall of said waste water vessel (100, 112).

10. The method of any one of claims 1 to 8, wherein the step of adding the reagents to the waste water vessel comprises pumping them into the waste water vessel (100, 112).

11. The method of any preceding claim, wherein the method forms:
a layer of liquid fats oils and/or grease deposits;
a layer of sodium chloride solution; and
nitrogen gas, in the waste water vessel.

12. The method of claim 11, wherein the layer of liquid fats oils and/or grease deposits is the top layer and said method further comprises the step of drawing off the layer of liquid fats oils and/or grease deposits.

13. The method of any preceding claim, wherein the method further comprises the step of adding a quantity of an inhibitor to the waste water vessel.

14. The method of claim 13, wherein the quantity of the inhibitor is selected such that the temperature of the solidified fats oils and/or grease deposits is below 96°C.

15. The method of any one of claims 13-14, wherein the step of adding the inhibitor is performed after the steps of adding the reagents and in response to detecting a temperature of said water vessel rising above a predetermined temperature.

## Patentansprüche

1. Ein Verfahren zum Reinigen eines Schmutzwasserfahrzeugs (100, 112), welches in der Schmutzwasserindustrie verwendet wird, welches Verfahren aufweist:
Hinzufügen einer ersten Menge eines ersten Reagenzes, welches ein Natriumsalz ist, zu dem Schmutzwasserfahrzeug; und
Hinzufügen einer zweiten Menge eines zweiten Reagenzes, welches ein Chlorsaltz ist, zu dem Schmutzwasserfahrzeug,
wobei die genannten ersten und zweiten Reagenzen solche Reagenzen sind, die zusammen in einer exothermen Reaktion reagieren, deren Produkte Natriumchlorid und Stickstoff aufweisen, wobei die durch die exotherme Reaktion generierte Wärme ausreichend ist, um verfestigte Fette, Öle und/oder Schmierablagerungen (105) in dem Schmutzwasserfahrzeug (100, 112) zum Schmelzen bringen.

2. Das Verfahren nach Anspruch 1, wobei das genannte Verfahren ferner den Schritt des Hinzufügens einer dritten Menge eines Aktivators zu dem Schmutzwasserfahrzeug (100, 112) aufweist, wobei die dritte Menge ausgewählt wird, um eine Temperatur zu steuern, auf welche die verfestigten Fette, Öle und/oder Schmierablagerungen (105) durch die exotherme Reaktion erhöht werden.

3. Das Verfahren nach Anspruch 2, wobei ein Gemisch, das den genannten Aktivator, das genannte erste Reagenz und das genannte zweite Reagenz aufweist, einen pH-Wert zwischen 1,5 und 2,5 hat.

4. Das Verfahren nach einem der Ansprüche 2-3, wobei die dritte Menge derart ausgewählt ist, dass die exotherme Reaktion die Temperatur der verfestigten Fette, Öle und/oder Schmierablagerungen (105) auf unter 96°C erhöht, vorzugsweise auf zwischen 50-75°C.

5. Das Verfahren nach einem der voranstehenden Ansprüche, welches Verfahren den weiteren Schritt des Hinzufügens einer Menge eines Tensids zu dem Schmutzwasserfahrzeug aufweist.

6. Das Verfahren nach einem der voranstehenden Ansprüche, wobei das erste Reagenz Natriumnitrit ist.

7. Das Verfahren nach einem der voranstehenden Ansprüche, wobei das zweite Reagenz Ammoniumchlorid ist.

8. Das Verfahren nach einem der voranstehenden Ansprüche, wobei die Produkte der Reaktion der ersten und zweiten Reagenzen aus Natriumchlorid, Stickstoff und Wasser bestehen.

9. Das Verfahren nach einem der voranstehenden Ansprüche, wobei der Schritt des Hinzufügens der Reagenzen zu dem Schmutzwasserfahrzeug das Sprühen derselben auf eine Wand des genannten Schmutzwasserfahrzeugs (100, 112) aufweist.

10. Das Verfahren nach einem der Ansprüche 1 bis 8, wobei der Schritt des Hinzufügens der Reagenzen zu dem Schmutzwasserfahrzeug das Pumpen derselben in das Schmutzwasserfahrzeug (100, 112) aufweist.

11. Das Verfahren nach einem der voranstehenden Ansprüche, wobei das Verfahren Folgendes formt:
Eine Schicht von flüssigen Fetten, Ölen und/oder Schmierablagerungen;
eine Schicht von Natriumchloridlösung; und
Stickstoffgas, in dem Schmutzwasserfahrzeug.

12. Das Verfahren nach Anspruch 11, wobei die Schicht von flüssigen Fetten, Ölen und/oder Schmierablagerungen die oberste Schicht ist und das genannte Verfahren ferner den Schritt des Abnehmens der Schicht von flüssigen Fetten, Ölen und/oder Schmierablagerungen aufweist.

13. Das Verfahren nach einem der voranstehenden Ansprüche, wobei das Verfahren ferner den Schritt des Hinzufügens einer Menge eines Inhibitors zu dem Schmutzwasserfahrzeug aufweist.

14. Das Verfahren nach Anspruch 13, wobei die Menge des Inhibitors derart ausgewählt ist, dass die Temperatur der verfestigten Fette, Öle und/oder Schmierablagerungen unter 96°C liegt.

15. Das Verfahren nach einem der Ansprüche 13-14, wobei der Schritt des Hinzufügens des Inhibitors nach den Schritten des Hinzufügens der Reagenzen und in Erwiderung darauf durchgeführt wird, dass detektiert wird, dass eine Temperatur des genannten Wasserfahrzeugs sich über eine vorbestimmte Temperatur hinaus erhöht.

## Revendications

1. Procédé de nettoyage d'une cuve d'eaux usées (100, 112) utilisée dans l'industrie des eaux usées, le procédé comprenant :
l'ajout d'une première quantité d'un premier réactif qui est un sel de sodium à la cuve d'eaux usées ; et
l'ajout d'une deuxième quantité d'un second réactif qui est un sel de chlore à la cuve d'eaux usées,
lesdits premier et second réactifs étant des réactifs qui réagissent ensemble dans une réaction exothermique dont les produits comprennent du chlorure de sodium et de l'azote, la chaleur produite par la réaction exothermique étant suffisante pour provoquer la fusion des huiles grasses et/ou des dépôts de graisse solidifiés (105) dans la cuve d'eaux usées (100, 112).

2. Procédé selon la revendication 1, dans lequel ledit procédé comprend en outre l'étape d'ajout d'une troisième quantité d'un activateur à la cuve d'eaux usées (100, 112), dans lequel la troisième quantité est sélectionnée afin de maîtriser une température des huiles grasses et/ou des dépôts de graisse solidifiés (105) qui s'est élevée par la réaction exothermique.

3. Procédé selon la revendication 2, dans lequel un mélange comprenant ledit activateur, ledit premier réactif et ledit second réactif a un pH entre 1,5 et 2,5.

4. Procédé selon les revendications 2 et 3, dans lequel la troisième quantité est sélectionnée de sorte que la réaction exothermique élève la température des huiles grasses et/ou des dépôts de graisse solidifiés (105) jusqu'à au-dessous de 96 °C, de préférence entre 50 et 75°C.

5. Procédé selon l'une quelconque des revendications précédentes, ledit procédé comprenant l'étape supplémentaire d'ajout d'une quantité d'un tensioactif à la cuve d'eaux usées.

6. Procédé selon l'une quelconque des revendications précédentes, dans lequel le premier réactif est du nitrite de sodium.

7. Procédé selon l'une quelconque des revendications précédentes, dans lequel le second réactif est du chlorure d'ammonium.

8. Procédé selon l'une quelconque des revendications précédentes, dans lequel les produits de la réaction des premier et second réactifs consistent en chlorure de sodium, azote et eau.

9. Procédé selon l'une quelconque des revendications précédentes, dans lequel l'étape d'ajoute des réactifs à la cuve d'eaux usées comprend leur pulvérisation sur une paroi de ladite cuve d'eaux usées (100, 112).

10. Procédé selon l'une quelconque des revendications 1 à 8,
dans lequel l'étape d'ajout des réactifs à la cuve d'eaux usées comprend leur pompage dans la cuve d'eaux usées (100, 112).

11. Procédé selon l'une quelconque des revendications, dans lequel le procédé fourme :
une couche liquide d'huiles grasses et/ou de dépôts de graisse ;
une couche de solution de chlorure de sodium ; et
du gaz d'azote, dans la cuve d'eaux usées.

12. Procédé selon la revendication 11, dans lequel la couche liquide d'huiles grasses et/ou de dépôts de graisse est la couche supérieure et ledit procédé comprend en outre l'étape consistant à ôter la couche liquide d'huiles grasses et/ou de dépôts de graisse.

13. Procédé selon l'une quelconque des revendications précédentes, dans lequel le procédé comprend en outre l'étape d'ajout d'une quantité d'un inhibiteur à la cuve d'eaux usées.

14. Procédé selon la revendication 13, dans lequel la quantité de l'inhibiteur est sélectionnée de sorte que la température des huiles grasses et/ou des dépôts de graisse solidifiés est au-dessous de 96 °C.

15. Procédé selon l'une quelconque des revendications 13 et 14, dans lequel l'étape d'ajout de l'inhibiteur est effectuée après les étapes d'ajout des réactifs et en réponse à la détection d'une température de ladite cuve d'eau dépassant une température prédéterminée.
